(19) Europäisches Patentamt

European Patent Office

Office européen des brevets

(11) **EP 4 647 961 A1**

(12) **EUROPEAN PATENT APPLICATION**

(43) Date of publication:
**12.11.2025 Bulletin 2025/46**

(21) Application number: **25175178.0**

(22) Date of filing: **08.05.2025**

(51) International Patent Classification (IPC):
**G06K 19/07** (2006.01)  **G06K 7/10** (2006.01)
**H02J 50/80** (2016.01)  **H04W 52/02** (2009.01)

(52) Cooperative Patent Classification (CPC):
**G06K 7/10158; G06K 7/10128; G06K 19/0712;
H02J 50/80;** H04W 52/0261

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.05.2024 US 202463644793 P**

(71) Applicant: **Semtech Corporation
Camarillo CA 93012-8790 (US)**

(72) Inventors:
• **VOS, Gustav Gerald
Tsawwassen, British Columbia, V4L 1S8 (CA)**
• **DOST, Recep Serkan
Coquitlam, British Columbia, V3J 5A5 (CA)**
• **KARANDE, Nikhil
Coquitlam, British Columbia, V3B 8A6 (CA)**

(74) Representative: **Penza, Giancarlo
Bugnion S.p.A.
Viale Lancetti, 17
20158 Milano (IT)**

(54) **AMBIENT INTERNET-OF-THINGS DEVICES AND METHODS OF OPERATION OF SAME**

(57)     There are provided ambient internet of things (A-IoT) devices and methods of operation of same. Some embodiments relate to A-IoT device capabilities in relation to energy storage and energy harvesting. Some embodiments, relate to a harmonizing protocol for heterogenous A-IoT device types. Some embodiments, relate to uneven transmission power capabilities of A-IoT devices. Some embodiments relate to the control of carrier wave generation enabling transmission by some A-IoT device configurations. Some embodiments, relate to considering congestion control as it can relate to A-IoT devices.

**EP 4 647 961 A1**

**Description**

**CROSS-REFERENCE TO RELATED APPLICATIONS**

This application claims the benefit of and priority to United States Provisional Patent Application No. 63/644,793 filed on May 9, 2024, the contents of which are incorporated herein by reference in their entirety.

**FIELD**

The present invention pertains in general to wireless communication and in particular to ambient Internet-of-Things (IoT) devices and methods of operation of same.

**BACKGROUND**

Traditional IoT devices need a battery, for example a direct current (DC) power source, or other power source, for example AC power, in order to power the devices. However, these IoT devices may need one or more of a regular battery replacement or a constant alternating current (AC) power or a regular manual maintenance in order to ensure operational uptime. Thus, these IoT devices can be relatively complex and expensive in nature. Ambient IoT (A-IoT) devices are low complexity devices that can operate without a dedicated battery and/or power source. Some A-IoT devices may have energy storage that may be charged via energy harvesting or charged manually or other charging method. Even some A-IoT devices may be able to operate without having any energy storage. Due to this low complexity, an A-IoT device typically can be able to harvest energy from various sources in order to operate. It would be readily understood that a variety of power sources, for example radio frequency (RF) energy, solar, or other power source, can be used to harvest energy for the purpose of A-IoT device operation.

In addition, it is understood that backscatter communication can be considered a low-power communication technique, wherein backscatter communication exploits the reflected or backscattered signals in order to transmit data. The backscattered signals can be a modulated reflection of one or more of carrier wave (CW) radio frequency (RF) signals, RF signals from a dedicated carrier emitter and the like. A typical backscatter communication system includes three components, namely a CW signal source, a backscatter transmitter equipped with antennas, and a backscatter signal receiver.

An example of backscatter communication is as follows, this communication can follow the following sequence of steps: 1) the CW signal source generates the incident signal, wherein the carrier wave source can be one or more of a dedicated CW signal generator or an existing entity, such as a cellular base station, user equipment (UE), a television (TV) tower and the like; 2) after arriving at the backscatter transmitter, the incident signal is remodulated and reflected by the backscatter antenna to deliver the information; and 3) the backscatter receiver detects the information after receiving the reflected signal from the backscatter transmitter.

It is to be understood that different from the traditional communication, which transmits data through the generation of an RF signal at a transmitter, backscatter communication conveys information by remodulating and reflecting signals from other signal sources instead of generating the carrier signal at the transmitter itself.

However, there are several issues with the operation of A-IoT devices known in the art. Therefore, there is a need for ambient IoT devices and methods of operation of same, that is not subject to one or more limitations of the prior art.

This background information is provided to reveal information believed by the applicant to be of possible relevance to the present invention. No admission is necessarily intended, nor should be construed, that any of the preceding information constitutes prior art against the present invention.

**SUMMARY**

An object of embodiments of the present disclosure is to provide ambient Internet-of-Things (IoT) devices and methods of operation of same.

In accordance with embodiments, there is provided a method for managing communication availability by an ambient internet of things (A-IoT) device. Upon determination that a transaction is required, the method includes checking energy storage levels of the A-IoT device and energy storage levels required to perform the transaction with a reader. Upon determination that there is insufficient energy storage levels to perform the transaction, the method further includes sending an indication to the reader. Upon determination that there is sufficient energy storage levels to perform the transaction, the method further includes proceeding with the transaction with the reader.

In some embodiments, prior to sending the indication, the method further includes determining that there is sufficient energy to send the indication.

In some embodiments, the indication is indicative of an out of power message.

In some embodiments, the indication is indicative of one or more of a request to pause the transaction, a request to save a state of the transaction and a request to continue the transaction at a future time.

In some embodiments, the method further includes monitoring energy storage levels. In some embodiments, upon determination that there is insufficient energy storage levels to complete the transaction, the method further includes sending an indication to the reader, wherein the indication is indicative of one or more of a request to pause the transaction, a request to save a state of the transaction and a request to continue the transaction at a future time.

In some embodiments, determination that a transaction is required includes receiving a transaction request for a downlink communication.

In accordance with embodiments, there is provided an apparatus for managing communication availability. The apparatus includes a processor and machine readable memory storing machine executable instructions. The machine executable instructions, which when executed by the processor configure the apparatus to perform one or more of the methods discussed above or elsewhere herein.

In accordance with embodiments, there is provided a computer program product including a computer readable memory storing computer executable instructions thereon that when executed by a processor perform one or more of the methods discussed above or elsewhere herein for managing communication availability by an ambient internet of things (A-IoT) device, the method

Embodiments have been described above in conjunctions with aspects of the present invention upon which they can be implemented. Those skilled in the art will appreciate that embodiments may be implemented in conjunction with the aspect with which they are described, but may also be implemented with other embodiments of that aspect. When embodiments are mutually exclusive, or are otherwise incompatible with each other, it will be apparent to those skilled in the art. Some embodiments may be described in relation to one aspect, but may also be applicable to other aspects, as will be apparent to those of skill in the art.

## BRIEF DESCRIPTION OF THE FIGURES

Further features and advantages of the present invention will become apparent from the following detailed description, taken in combination with the appended drawings, in which:

FIG. 1A illustrates a method for managing power availability by an A-IoT device, according to embodiments.

FIG. 1B illustrates a method for managing power availability by an A-IoT device, according to embodiments.

FIG. 2A illustrates a method for managing power availability by an A-IoT device, according to embodiments.

FIG. 2B illustrates a method for managing power availability by an A-IoT device, according to embodiments.

FIG. 3 illustrates a random access (RA) procedure.

FIG. 4 illustrates several random access (RA) configurations, in accordance with embodiments.

FIG. 5A illustrates a first device topology is considered which includes direct communication between an A-IoT device and a reader, in accordance with embodiments.

FIG. 5B illustrates a second topology is illustrated wherein there is an intermediate node associated with the communication between the A-IoT device and the reader, in accordance with embodiments.

FIG. 6 illustrates a topology that uses a dedicated CW node for CW generation and another node for backscatter, in accordance with embodiments.

FIG. 7 illustrates a topology that uses a dedicated CW node for CW generation and an intermediary node for backscatter, in accordance with embodiments.

FIG. 8 illustrates another topology that uses a dedicated CW node for CW generation and intermediary node for backscatter, in accordance with embodiments.

FIG. 9 is a schematic diagram of an electronic device, according to embodiments.

It will be noted that throughout the appended drawings, like features are identified by like reference numerals.

## DETAILED DESCRIPTION

According to embodiments, there are provided ambient internet of things (A-IoT) devices and methods of operation of same. Some embodiments relate to A-IoT device capabilities in relation to energy storage and energy harvesting. Some embodiments, relate to a harmonizing protocol for heterogenous A-IoT device types. Some embodiments, relate to uneven transmission power capabilities of A-IoT devices. Some embodiments relate to the control of carrier wave generation enabling transmission by some A-IoT device configurations. Some embodiments, relate to considering congestion control as it can relate to A-IoT devices.

*Variable ES and EH A-IoT Device Capabilities*

It has been realised that when considering A-IoT devices, energy storage (ES) and energy harvesting (EH) hardware can be expensive and can take up space within A-IoT devices. Furthermore, the amount of ES and EH required by a particular A-IoT device can depend on the application needs of a particular application or use of the A-IoT device, for example data latency tolerance, amount of data to be transmitted and the like. Thus, it has been realised that not all A-IoT devices will have the same ES and EH capabilities. For communication purposes, the reader (or receiver) does not have access to any information regarding how much energy the A-IoT device has available for communication.

According to embodiments, for mobile/A-IoT device originated (DO) messages, an A-IoT device will wait until its ES level is high enough to complete the transactions, for example complete the necessary transmissions and/or receptions. In some instances, due to packet errors or change in link the budget, the transaction may start but not be able to continue. In this case the, A-IoT device can send an indication of same, for example an *ES out of power message* (e.g., a control message). In some embodiments, the indication, for example the ES out of power message can be configured as a message or a field or a packet or a signal, wherein this indication can be implicitly or explicitly indicated. This control message can request the reader to do one or more of: pause the transaction, save the state, and/or continue the transaction at some point in the future when the A-IoT device has an ES level high enough to complete the transaction.

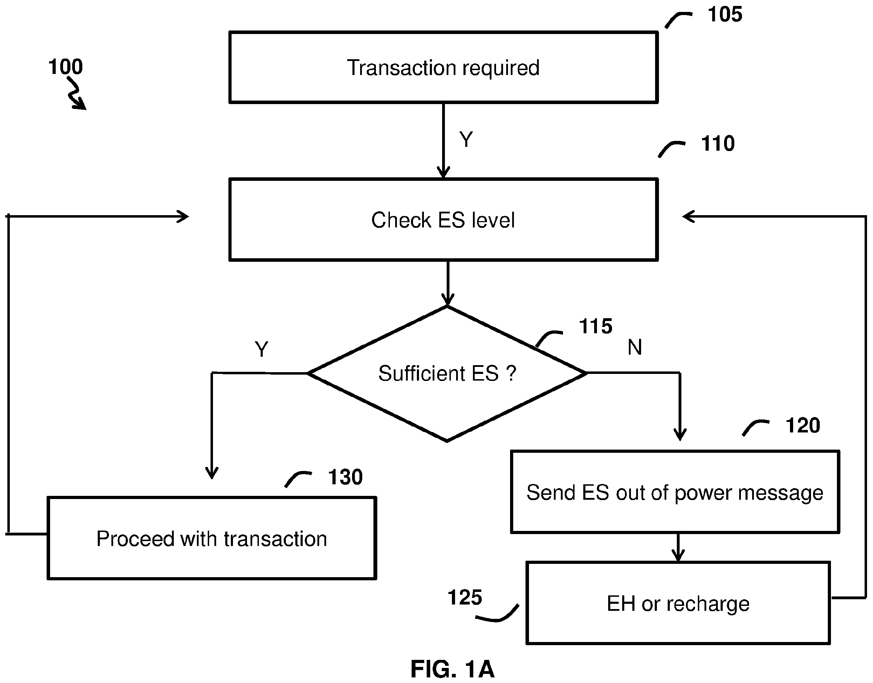

According to embodiments, there is provided a method for managing power availability by an A-IoT device, which is illustrated in FIG. 1A. This method **100** is performed by the A-IoT from the perspective wherein the A-IoT device is the device transmitting the originating message, which may be defined as device originating (DO).

The method includes the A-IoT device determining **105** that a transaction is required. For example a transaction can be considered to be the sending of an amount of information, for example application data or control information, by the A-IoT device. The A-IoT device checks **110** if the ES level thereof will be provided sufficient energy to complete the transaction by the A-IoT device.

If there is sufficient ES, the A-IoT device initiates or proceeds **130** with a new transaction with the reader. It is also to be considered that upon determination of sufficient ES, the A-IoT device may also continue a transaction if one was previously paused/pending. However, if there is insufficient ES, the A-IoT device backs off for a period of time during which the A-IoT device can energy harvest and/or recharge 125 the ES. After this back off period, the A-IoT will return the step of determining **115** if there is sufficient ES to perform the transaction.

During the transaction, the A-IoT device checks the ES level and the status of the transaction (e.g., amount of energy remaining to complete the transaction). This checking of the ES level can be performed intermittently, continuously or at predetermined intervals or the like.

If it is determined that the ES level is insufficient to complete the transaction, the A-IoT device sends **120** an *ES out of power message* to the reader requesting the transaction is paused. The A-IoT device saves the transaction state and goes to the above defined step of checking if the ES level thereof will provide sufficient energy to complete the transaction by the A-IoT.

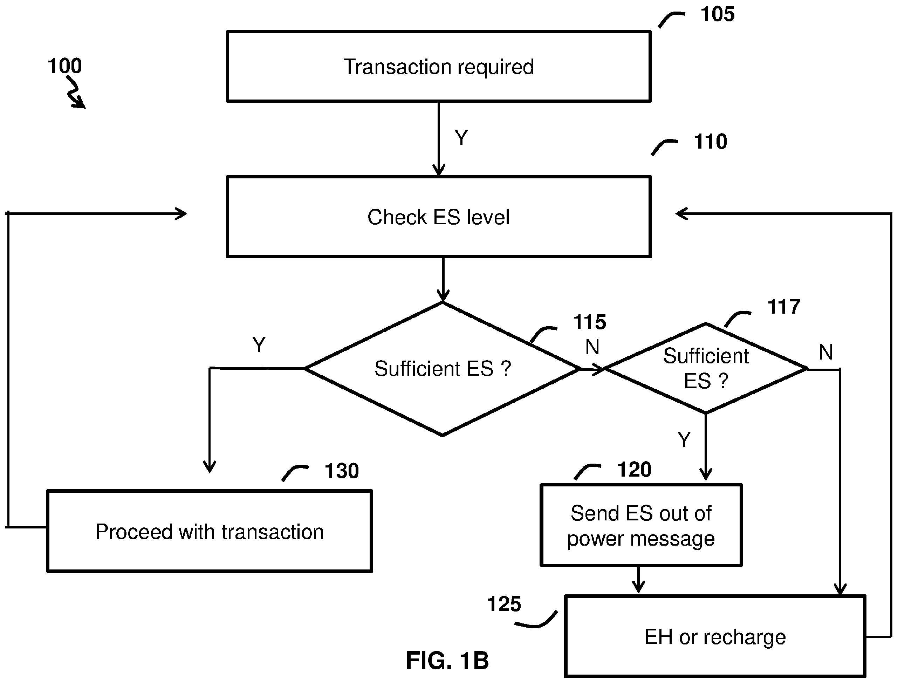

In some embodiments, as illustrated in FIG. 1B, prior to the A-IoT device sending **120** an *ES out of power message* to the reader, the A-IoT device performs an evaluation **117** to determine if the ES level thereof will provide sufficient energy for the A-IoT device to send the *out of power message* to the reader.

It will be readily understood by a person of skill in the art how to estimate if the A-IoT device has enough ES to complete the transaction.

According to embodiments, for sending an ES out of power message it is desired that there is enough ES to send the *ES out of power message* to the reader (e.g., the A-IoT device will pause the transaction when the ES is insufficient to complete the transaction, however the ES level should at least be sufficient that the A-IoT device can send the *ES out of power message* to the reader).

According to embodiments, the A-IoT device can send an *ES out of power message* (e.g., a control message) when ES is insufficient to complete a requested transaction by the reader (e.g., data transaction, mobility update, set memory, query ID).

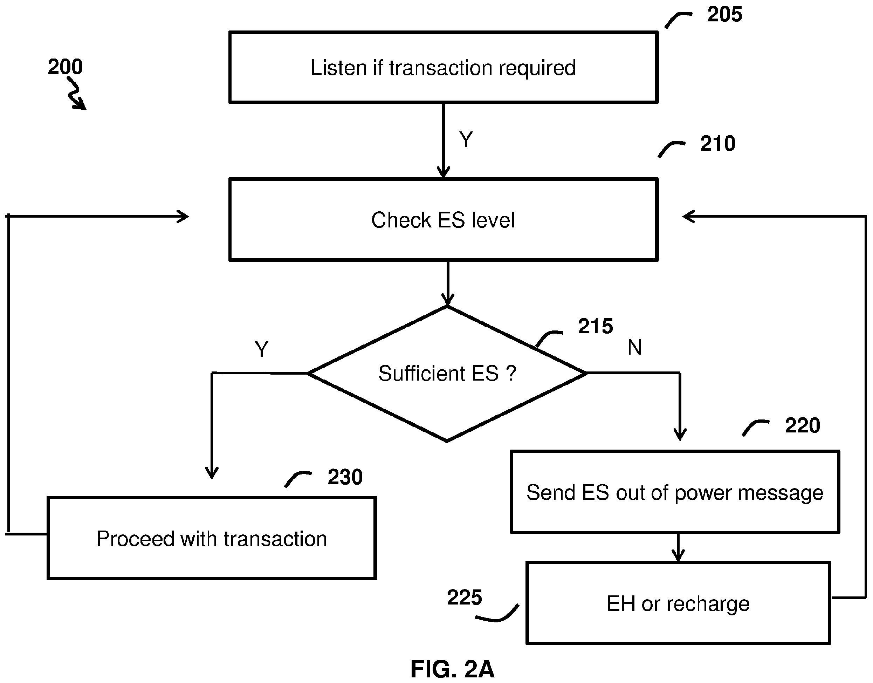

According to embodiments, there is provided a method for managing power availability by an A-IoT device, which is illustrated in FIG. 2A. This method **200** is performed by the A-IoT from the perspective wherein the A-IoT device is the

device receiving the message, which may be defined as device terminating (DT).

A system/network connects to a reader when there is a message to be sent to A-IoT device(s). The A-IoT device listens **205** periodically for an indication from the reader. The A-IoT device receives an indication from the reader (e.g., receives a message on the physical device to reader control channel (PDRCH; reader to device (R2D) physical layer channel) indicating that the reader has a message for the A-IoT device and thus a transaction (or transmission from the reader to the A-IoT device) is required.

The A-IoT device checks **210** if ES level is sufficient **215** enough to complete the transaction. If the ES level is sufficient, the A-IoT device proceeds **230** with reception of the transaction from the reader. If the ES level is insufficient, the A-IoT device sends **220** an *ES out of power message* to the reader indicating the transaction will be delayed for a period of time. During this period of time, the A-IoT device can proceed to EH or recharge **225.** The A-IoT device checks, for example, continuously, periodically or intermittently if ES level is sufficient enough to complete the transaction. If there is sufficient ES the reception of the message can proceed. If there is insufficient ES, the A-IoT device backs off for a period of time to energy harvest and/or recharge the ES and then checks, for example, continuously, periodically or intermittently if ES level is sufficient enough to complete the transaction.

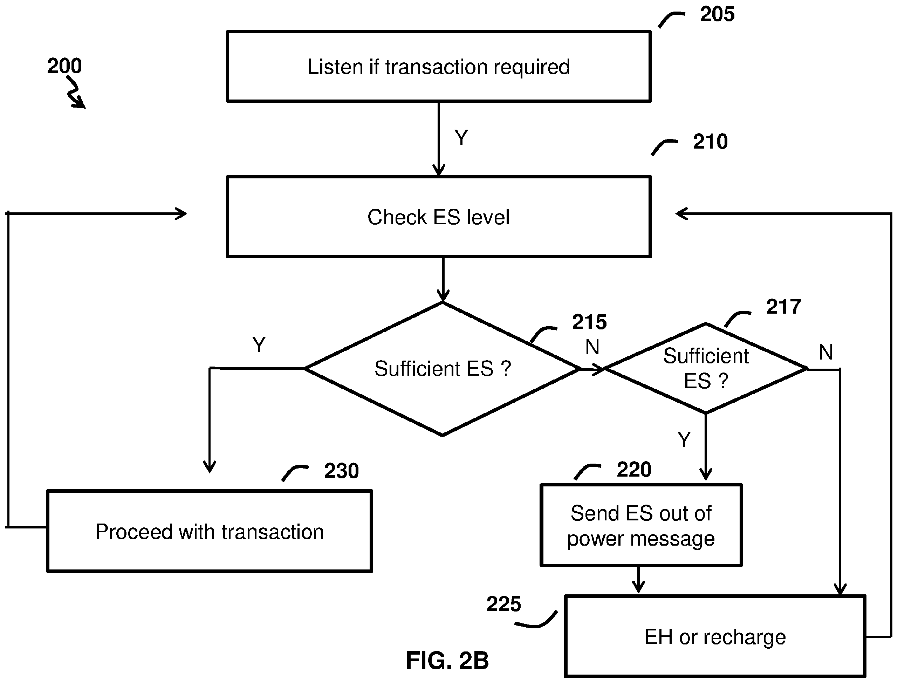

In some embodiments, as illustrated in FIG. 2B, prior to the A-IoT device sending **220** an *ES out of power message* to the reader, the A-IoT device performs an evaluation **217** to determine if the ES level thereof will provide sufficient energy for the A-IoT device to send the *out of power message* to the reader.

In the DT case when the A-IoT device has insufficient ES power, and the A-IoT device does not send an *ES out of power message,* the reader would likely need to repeatedly page the A-IoT device and possibly expand the paging area and/or deregister the A-IoT device since the reader is not getting any feedback from the A-IoT device. With the inclusion of the sending of an *ES out of power message* when the A-IoT device does not have sufficient ES for the reception of the transaction from the reader, the reader receives the out of power message, stops paging the A-IoT device and would wait for the A-IoT device to initiate the transaction when it has sufficient ES power. The above method can make the process more advantageous and/or efficient.

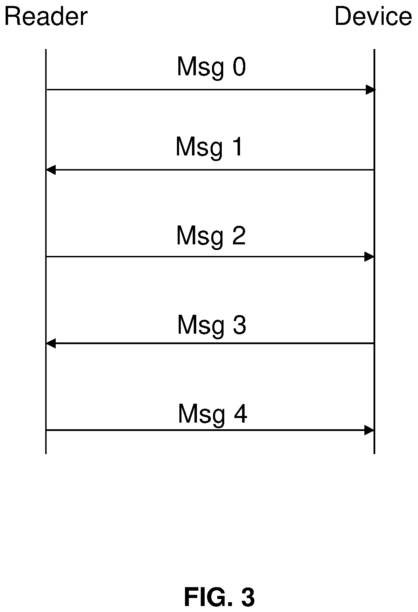

It is to be understood that the sending of an *ES out of power* message is possible using very little energy (or at least less than a full random access (RA) procedure). For ease of reference, a random access procedure between a reader and a device is illustrated in FIG. 3. Some example techniques to send an *ES out of power* message using little energy includes: 1) very small message; 2) Use only the first 2 steps of the random access (RA) procedure (e.g., sending msg 1 (preamble message) which includes A-IoT identifier (ID) + indication ES out of power). In some embodiments, the ID can be shortened if the reader assigns a temporary short ID; 3) System allocates RA slot where only ES out of power messages can be sent; 4) Using a separate physical channel without contention; 5) The ES out of power message can be configured as a signal (e.g., a sequence of bits).

*Harmonized Protocol for Heterogenous A-IoT Device Types*

It has been realised that there may be A-IoT devices on the network which can only do backscattering for transmission and some other devices which can transmit autonomously. There are at least four types of A-IoT devices, which include A-IoT devices that are backscattering devices for transmission and A-IoT devices that can transmit autonomously. A-IoT devices that are backscattering devices include 1) Type 0 (AD0) which cannot provide signal amplification and do not have any energy storage. For this format of A-IoT device, the uplink (UL) transmission is backscattered on a carrier wave (CW) provided externally. Neither downlink (DL) nor UL amplification is provided by the AD0 device; 2) Type 1 (AD1) which cannot provide signal amplification and has energy storage. However, neither DL nor UL amplification is provided by the AD1 device. For this format of A-IoT device the UL transmission is backscattered on a carrier wave provided externally; and 3) Type 2A (AD2A) which may be capable of signal amplification and has energy storage. Both DL and/or UL amplification can be provided by an AD2A device. The UL transmission of a AD2A device is backscattered on a carrier wave provided externally. There are also A-IoT devices that can transmit autonomously and these types of devices include Type 2B (AD2B) which is capable of self-generation of a signal and amplification. An AD2B device further has energy storage. Both DL and/or UL amplification can be provided by an AD2B device. The UL transmission of an AD2B device can be generated internally by the device (i.e., without external carrier wave). It is to be understood that other A-IoT device configurations are possible and are to be considered as encompassed within the scope of the instant application.

According to embodiments, in order to at least minimize network development and operation, it is believed to be prudent to have a single harmonized protocol or network access that is used for all types of A-IoT devices, including the above.

According to embodiments, for a harmonized protocol or network access, the signals from all the types of devices (e.g., AD0, AD1, AD2A, AD2B etc.) can use the same network resources. There can be two modes of network accesses, namely Mode 1 and Mode 2 and further defined below.

*Mode 1 - Carrier Wave Present:*

According to embodiments, when a CW is present, all A-IoT devices that transmit via backscatter (e.g., Type 0 (AD0), Type 1 (AD1) and Type 2A (AD2A) device) can be able to backscatter a Carrier Wave (CW). For A-IoT devices that have potential onboard amplification of a backscatter transmission (e.g., Type 2A (AD2A)) these A-IoT devices may also be able to apply gain to the backscatter signal.

According to embodiments, for A-IoT devices that do not backscatter or that transmit autonomously (e.g., Type 2B (AD2B) device) these devices can transmit a signal (i.e., not a backscattered transmission) at least in part based on the CW signal that such type of device has received (e.g., the Type 2B device received). The signal transmitted from such device can be configured to mimic a backscatter transmission (e.g., by using the same time and frequency of received CW), however this transmission by this type of A-IoT is not a backscatter transmission.

*Mode 2 - Carrier Wave Not Present:*

According to embodiments, when a CW is not present, all A-IoT devices that can only backscatter (e.g., Type 0 (AD0), Type 1 (AD1) and Type 2A (AD2A) devices) will not be able to transmit. For A-IoT devices that do not backscatter or that transmit autonomously (e.g., Type 2B (AD2B) device) can autonomously transmit a signal where the signal can mimic a backscatter signal in order that the receivers (or readers) do not see a difference between a backscatter signal and this autonomously generated signal. These type of A-IoT devices would be configured or pre-configured, either dynamically via messaging, or the like, such that their autonomously transmitted signal mimics the backscatter signal.

According to embodiments, the A-IoT devices including AD0, AD1 and AD2A will backscatter when there is a CW, wherein the CW can be generated on random access (RA) slots. It is to be noted that an RA can be any slot on which the reader is able to receive data and/or where the A-IoT device sends a signal or message to the network.

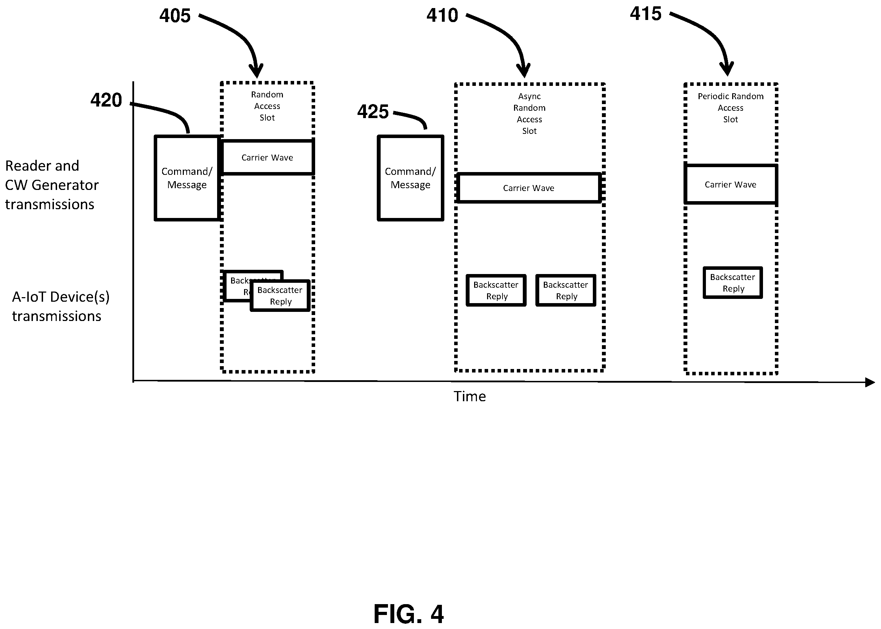

Having regard to FIG. 4, the following example random access (RA) configurations and methods are possible: For example, **405** illustrates a random access slot, **410** illustrates an asynchronous random access slot and **415** illustrates a periodic random access slot.

According to embodiments, a command/message **420, 425** can be used for identifying where in frequency and when in time a random access (RA) slot occurs, for example as illustrated by **405** and **410**. In some embodiments, the command or message can also be used for identifying where in frequency and when in time a backscatter response will occur. A command/message can also be used for congestion control (e.g., limiting which A-IoT devices are permitted to use the RA slot).

According to some embodiments, a RA slot may not always have a command/message preceding it, for example as illustrated by **415**. There may also be no time gap or some time gap between the command or message and the RA slot. A single command or message may also provide time and/or frequency information about more than one RA slots.

According to embodiments, a RA slot may be configured to be periodic or may be configured to be asynchronous. The network and/or the reader may dynamically change this feature of the RA slot.

According to embodiments, the RA slots may have different lengths allowing for more than one backscatter reply from different A-IoT devices.

According to embodiments, the RA slots may have backscattered replies which are overlapping for example as illustrated by **405** and/or non-overlapping, for example as illustrated by **410.** If overlapping the backscatter replies may be decodable using multi-user detection techniques, or other techniques as would be readily understood.

According to embodiments, the RF frequency of the carrier wave and corresponding backscatter replies may be the same or overlapping or different for different RA slots. According to embodiments, the backscatter replies may apply different frequency offset to avoid collisions.

According to embodiments, for Type 2B (AD2B) devices can also transmit only during RA slots. Details in this regard can be defined as follows:

A RA slot is a dedicated time slot where the A-IoT device sends a signal/message to the network. The slots can be part of slotted-Aloha access method.

The CW generating entity may or may not transmit a CW signal.

The CW can be generated to allow Type 0, Type 1 and Type 2A A-IoT devices to access. The CW may also be used by the Type 2B device as an access trigger.

Type2B (AD2B) devices may transmit during the RA slot without a CW.

According to embodiments, there can be one or more types of RA slots. For example, a RA slot can be a non-contention based slot can be allocated to a single A-IoT device, or a limited contention based slot can be allocated to a group of A-IoT devices, or a contention based slot (e.g. allocated to many A-IoT devices). In this regard, it is to be noted that a CW may or may not be transmitted in any of the above RA slots.

According to embodiments, a Type 2B device can determine the RA slot type, RA slot location (e.g. time and/or frequency of the RA slot), synchronization (sync) information. The determination of the above noted information can be based on one or more of: the detection time of the transmitted CWs, and/or the signaling information (implicit or explicit) decoded within the CW, and/or the signaling information (implicit or explicit) from the reader (e.g., on demand system information messages). In this regard, it is to be noted that Type 0, Type 1 and Type 2A A-IoT devices will not be able to use slots without CW or insufficient CW power.

*Uneven TX Power Capabilities*

It has been realised that, each of the four A-IoT device types, for example as defined above, may have different transmission power capabilities. The benefit of backscatter amplification in AD2A and/or AD2B A-IoT devices is that the amplification can extend the coverage associated with the A-IoT device. However, this extended coverage can lead to neighbor cell interference (e.g., interference between A-IoT devices serviced by different readers). Even for the case of AD0 device and AD1 device, if the backscatter signal level is high (e.g., due to high CW level), this signal level could lead to neighbor cell interference.

Furthermore, if the A-IoT devices are operated alongside each other, the higher transmission power devices can overpower the weaker transmission power devices. For example, an AD2A device, which is capable of backscatter amplification, may over-power AD1 device and AD0 device, neither of which have an associated amplifier. Similarly, for autonomous transmission of a AD2B device if the transmission mimics the backscatter signal of an AD1 device, AD0 device or AD2A device, the transmission of the AD2B device may also overpower transmissions from an AD1 device, AD0 device or AD2A device.

According to embodiments, when an A-IoT device is able to select different code rates, there is provided a method for performing same.

According to embodiments, the A-IoT device can perform power control on the transmissions in order to reduce co-channel interference (e.g., neighboring readers and/or A-IoT devices), reduce A-IoT device power consumption and/or increase spectral re-use. In addition, maintaining similar powers across the A-IoT device types can help provide RA fairness (e.g., in the case where different codes are used).

According to embodiments, this selection can be performed in an open loop configuration. The A-IoT device can measure the power level of the message/signal from the reader (for example on the PRDCH) and/or the reader can also provide an indication of the transmission power level used. The A-IoT device would then be able to estimate the required transmission (Tx) level.

According to embodiments, this selection can additionally or alternatively be performed in a closed loop configuration. There may be indications regarding adjusting the Tx levels in the messages from the reader (e.g., a form of close-loop power control). It is to be noted that radio frequency identification (RFID) does not have power control, therefore having a power control mechanism is advantageous.

According to embodiments, the power can be varied using multiple methods. For example, for some A-IoT devices, e.g. AD0 device or AD1 device, the backscattering impedance can be varied. As another example, for some A-IoT devices, e.g., AD2A device, the backscattering impedance and/or amplifier levels can be varied. As a further example, for some A-IoT devices, e.g., AD2B device, the backscattering impedance and/or amplifier levels can be varied.

According to embodiments, in addition to power control, the A-IoT devices can also select transmission code rates based on the required Tx level. For example, the A-IoT device may choose to select lower code rates if the Tx level is at or near maximum and vice versa.

For example, having regard to features of a RA procedure, the A-IoT device can use the first message Msg 0 to set the transmission level of Msg 1. Optionally, the A-IoT device can use the power level of Msg 2 to set the level of Msg 3, etc.

According to embodiments, the following is a non-limiting example of a multi-step messaging access. 1) Msg0: (Reader->Device): the A-IoT device receives a command e.g., a group command to trigger device to send Msg 1; 2) Msg 1: (Device->Reader): the A-IoT device transmits an identifier (ID) on RA slot; 3) Msg 2: (Reader->Device): the reader sends UL grant to ID to transmit data (this may be considered to act as an acknowledgement (ACK)); 4) Msg 3: (Device->Reader): the A-IoT device transmits UL data with a unique ID, however it is to be understood that some collisions may occur however this can be a rare occurrence); 5) Msg 4: (Reader->Device): the reader sends an ACK with the unique ID.

*Carrier Wave Generation*

When the same device that transmits a CW (carrier wave) is also simultaneously decoding the backscatter wave, and this can sometimes be referred to as mono-static. Full duplex backscattering is complex and expensive due to the large amount of carrier wave interference cancelation required. It is to be understood that a legacy cellular base transceiver station (BTS) or legacy user equipment (UE) is unlikely to be able to support full duplex backscatter without additional hardware.

When different devices perform the CW generation and the decoding of the backscatter signal, this is often referred to as bi-static operation. The CW generation can be done by devices dedicated to generating CW signals (i.e.,

nodes that only generate the CW and do not attempt to decode the backscattered signal) or by a BTS or UE that are not operating as the reader.

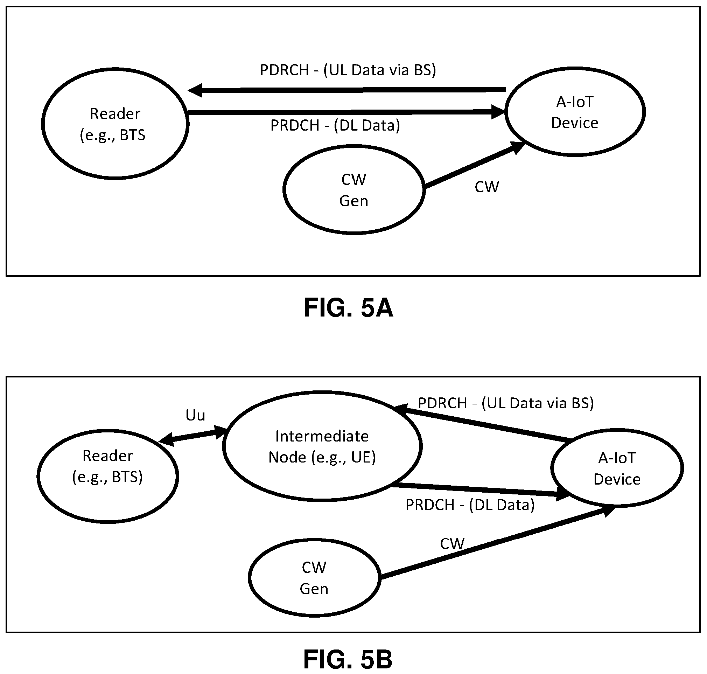

With reference to FIG. 5A there is a first device topology is considered which includes direct communication between an A-IoT device and a reader. In FIG. 5B a second topology is illustrated wherein there is an intermediate node associated with the communication between the A-IoT device and the reader.

It has been realised that the following problems may have to be considered with respect to A-IoT and reader communication. How can interference management be performed, there is a need for synchronization, the CW generator is using Uu communication interface is expensive (for example due to hardware and subscriber identity module (SIM), and the UE cannot transmit in the DL band. For reference, it is understood that Uu is reflective of a cellular network connection in the traditional manner, which is performed over a Uu interface, wherein Uu refers to the logical interface between a UE and a base station.

According to embodiments, when using dedicated CW generation nodes, the CW node and the node receiving the backscatter would need to be coordinated and/or synchronized. This would require that there be some level of control over the CW node by the NW and/or reader. At least the access timing (e.g., for slotted-aloha) would need to be known by the CW node.

According to embodiments for control over the CW node that is outside of the topology, the reader (i.e., the BTS and/or intermediate node) signals to the dedicated CW node (e.g. CW generators) when to transmit CW and what configuration and parameters of the CW are required.

According to embodiments, the CW nodes can be signaled via one or more of the following.

According to embodiments, for cellular Uu protocol the CW node would need to be a UE. This can be done for example via direct radio resource control (RRC) / non-access stratum (NAS) signaling, SIB messages or paging. For RRC/NAS the messages can configure/enable/disable. For the SIB messages the content can provide the configuration information. For paging, the page message that can be used as a trigger to generate the CW.

According to embodiments, for non-cellular Uu protocol (e.g. communication protocols that can include cellular sidelink, LoRa, BT, Zigbee, WiFi, etc.), a non-cellular Uu would be cheaper but would not have the same range. It is understood that similar to cellular methods: direct messaging, broadcasted configuration or paging/beaconing can be used to activate the CW node / generator.

According to embodiments, the CW node may listen for messages on the PRDCH. The CW node can decode the messages directed to the A-IoT device and generate the CW signal based on these messages. For example, the CW can be generated right after the end of the message.

According to embodiments, if the CW generator is a UE, the CW generator can be provided the following: the one or more frequencies for the CW signal or the timing of the CW signal. With respect to the timing of the CW signal, this timing can be either absolute or relative time of the slotted-aloha slot, or the timing is in reference to the BTS timing (e.g., SFN, etc.), for example one-slot scheduling, wherein it is scheduled each time it is needed, or periodic scheduling, wherein this scheduling can be similar to a configured grant, or other similar mechanism.

According to embodiments, if the CW generator is not a UE, the CW generator is provided the following: a method to obtain clock synchronization in order to generate CW at the allowed or required time, for example slotted-aloha slot timing; the one or more frequencies for the CW signal; the timing of the CW signal. With respect to the timing of the CW signal, this timing can be either absolute or relative time of the slotted-aloha slot, or the timing is in reference to the synchronization clock, for example one-slot scheduling, for example schedule each time it is needed or periodic, wherein this scheduling can be similar to a configured grant, or other similar mechanism.

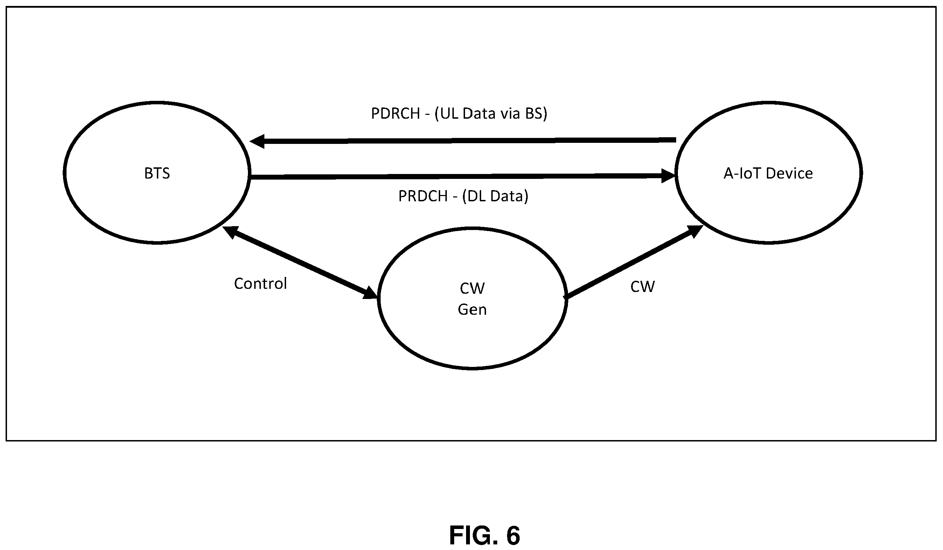

According to embodiments, when considering topology 1 as illustrated in FIG. 6, this topology uses a dedicated CW node for CW generation and another node for backscatter (which has been marked as "BS" in FIG. 6) detection. This allows for a bi-static CW and backscatter signal to the reader. In this embodiment, control signals are communicated between the BTS and the CW generator.

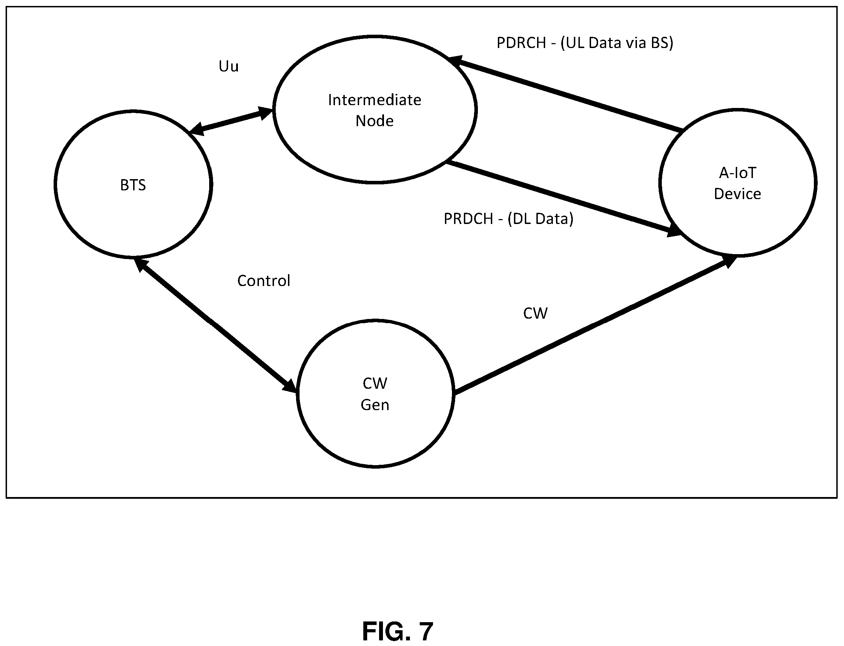

According to embodiments, when considering topology 2a as illustrated in FIG. 7, this topology uses a dedicated CW node for CW generation and an intermediary node for backscatter (which has been marked as "BS" in FIG. 7) detection. This allows for a bi-static CW and backscatter signal to the reader. In this embodiment control signals are communicated between the BTS and the CW generator.

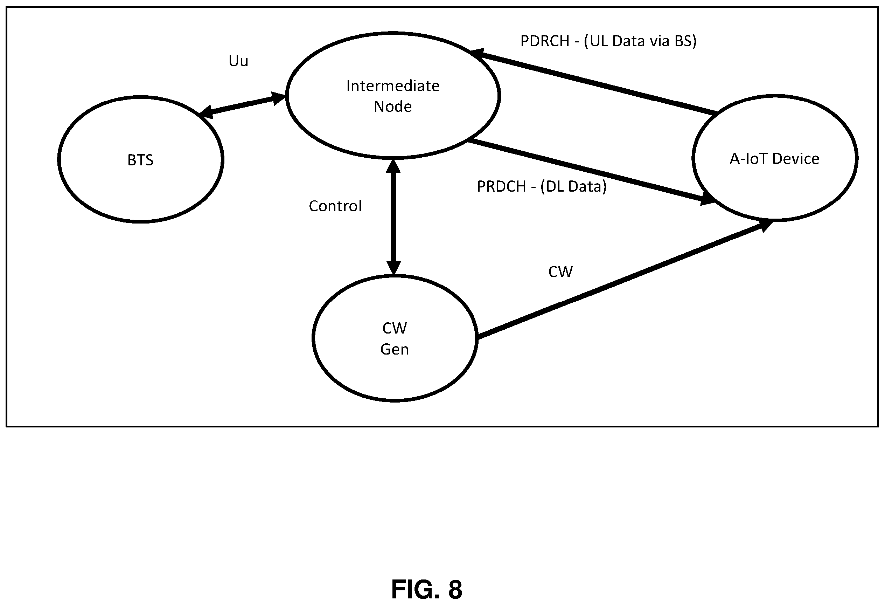

According to embodiments, when considering topology 2b as illustrated in FIG. 8, this topology uses a dedicated CW node for CW generation and intermediary node for backscatter (which has been marked as "BS" in FIG. 8) detection. This allows for a bi-static CW and backscatter signal to the reader. In this embodiment control signals are communicated between the intermediate and the CW generator.

*Congestion Control*

It has been realised that in some use cases, like inventory control, there would be scenarios when plural A-IoT devices will need access to the system simultaneously which will create high congestion. For example, this may occur when a truck or pallet of new A-IoT devices for inventory registration arrives. This sudden surge in new A-IoT devices can overload the system. In such high congestion situations, how can DT communications be performed, how can an A-IoT device be paged, and how does the reader know where to page for the A-IoT device.

According to embodiments, A-IoT device determines the random access (RA) slots time/frequency. This may be determined based on one or more of: the transmission times of CWs, and/or, the broadcasted information modulated on top of the CW, and/or, the reader broadcasted information via system information messages (or beacons). The A-IoT device can pick a non-unique ID, for example a random ID or subset of ID) or can use a unique ID.

According to embodiments, there is provided a multi-step contention-based access with non-unique ID in Msg 1. This can follow the following sequence of messages: 1) Msg 0: (Reader->Device): the device receives a command e.g., a group command to trigger device to send Msg 1; 2) Msg 1: (Device->Reader): the A-IoT device transmits non-unique ID on RA slot; 3) Msg 2: (Reader->Device): the reader sends resource assignment messages where the A-IoT device can transmit data, wherein this can act as an ACK of Msg 1; 4) Msg 3: (Device->Reader): the A-IoT device transmits data with unique ID, wherein some collisions may occur however this may be a rare occurrence); 5) Msg 4: (Reader->Device): the reader sends an acknowledgement (ACK).

According to embodiments, there is provided a multi-step contention-based access with unique ID in Msg 1. This can follow the following sequence of messages: 1) Msg 0: (Reader->Device): the A-IoT device receives a command e.g., a group command to trigger device to send Msg 1; 2) Msg 1: (Device->Reader): the A-IoT device transmits unique ID on RA slot; 3) Msg 2: (Reader->Device): the reader sends resource assignment messages where the A-IOT device can transmit data, wherein this can act as an ACK of Msg1; 4) Msg 3: (Device->Reader): the A-IoT device transmits data, wherein no collisions should occur; 5) Msg 4: (Reader->Device): reader sends ACK.

According to embodiments, there is provided a multi-step contention-based access with unique ID with no data, for example ID only for an inventory use case. This can follow the following sequence of messages: 1) Msg 0: (Reader->Device): the A-IoT device receives a command e.g., a group command to trigger device to send Msg 1; 2) Msg 1: (Device->Reader): the A-IoT device transmits unique ID on RA slot; 3) Msg 2: (Reader->Device): the reader sends ACK of Msg 1. In some embodiments, ACK information can also be aggregated with the next Msg 0.

According to embodiments there are provided methods to reduce RA slot collisions. According to some embodiments, a first method can include features wherein each RA slot is available only to a subset of A-IoT devices. For example, the subset can be portioned based on one or more of: Device ID, device type, device Tx power capability or device's expected Tx power level.

According to embodiments, with respect to device ID above, methods associated therewith can include one or more of: query window tree protocol (QwT), collision window tree protocol (CwT), or other method of limiting device IDs range as would be readily understood by a worker skilled in the art.

According to embodiments, another method to reduce RA slot collisions can include reduction of the size of the RA transmission (e.g., Msg 1). This can be enabled by one or more of: query window tree protocol (QwT), collision tree protocol (CT), collision window tree protocol (CwT) or other method of limiting the size of the RA transmission as would be readily understood by a worker skilled in the art.

According to embodiments, another method to reduce RA slot collisions can include increasing RA slot capacity. This can be enabled by providing one or more of: a RA slot at multiple time/frequencies, spatial re-use (for example through beamforming, sectorization, Tx power control and interference cancellation) and, allowing multi-users in the same RA Slot.

According to embodiments, allowing multiusers in the same RA slot can be provided by one or more of: multi-user (MU) detection, MU-multi in multi out (MIMO) or other method of allowing multiusers in the same RA slot as would be readily understood by a worker skilled in the art.

According to embodiments, multi-users detection can be aided by: one or more of the use of super positioning methods, the use of interference cancellation, the use of random or differing power levels (for example which can help super position coding and interference cancellation), the use of distributed readers/antennas.

According to embodiments, MU-MIMO can be aided by one or more of: the use of different spreading codes (e.g. orthogonal or non orthogonal multiple access (NOMA), the use of different reference codes (e.g. demodulation reference symbols (DMRS), the use of power control to avoid the CDMA near far problem and the use of distributed readers/antennas.

According to embodiments, an additional optimization can include a random access backoff range. For example, A-IoT devices can pick a random-access delay (e.g., a number of RA slots to wait) in units of RA-slots before the A-IoT device transmits within a random delay range which is signaled to the A-IoT device, for example, this could be broadcasted by the reader, included within a reader to device (R2D) message, included in the command message, or pre-pended to the CW. As another example, the reader can dynamically change the random-access delay range based on congestion. For example, reader can increase the random delay range when congestion occurs and decrease this range when traffic is light. Before the A-IoT device transmits on its initially randomly chosen RA-slot, the A-IoT can re-read the random delay range. If the random delay range changes, the A-IoT device can re-pick a new random slot based on the new random delay range and the time already waited. This may be calculated based on the following:

## New RA slot = rand (new random delay − time already waited)

wherein rand is a random number generator function.

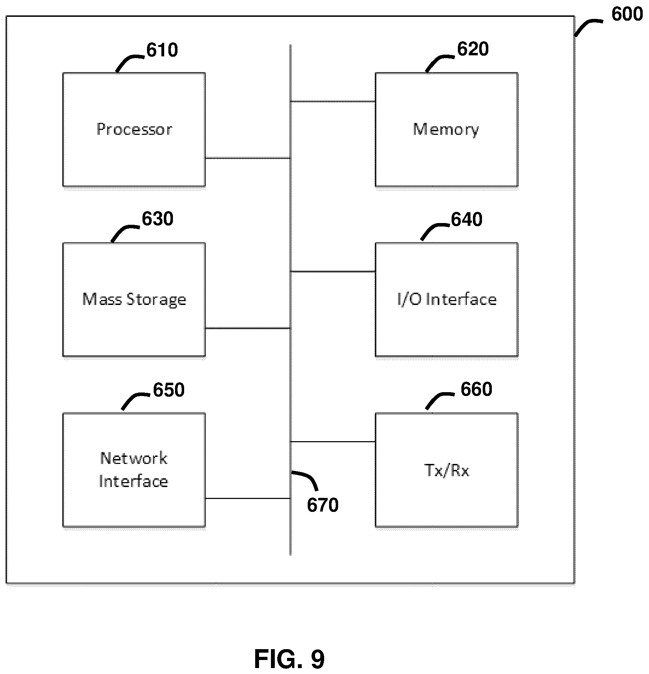

FIG. 9 is a schematic diagram of an electronic device **600** that may perform any or all of the steps of the above methods and features described herein, according to different embodiments. For example, network devices, network nodes, end nodes, computer devices, wireless gateways, mobility routers, access point devices, controller devices, wireless network controllers, base transceiver stations (BTS) or readers. End-user computers, smartphones, IoT devices, ambient IoT devices etc. can be also configured as electronic devices.

As shown, the device includes a processor **610,** memory **620,** non-transitory mass storage **630,** I/O interface **640,** network interface **650,** and a transceiver **660,** all of which are communicatively coupled via bi-directional bus **670.** According to certain embodiments, any or all of the depicted elements may be utilized, or only a subset of the elements. Further, the device **600** may contain multiple instances of certain elements, such as multiple processors, memories, or transceivers. Also, elements of the hardware device may be directly coupled to other elements without the bi-directional bus.

The memory **620** may include any type of non-transitory memory such as static random access memory (SRAM), dynamic random access memory (DRAM), synchronous DRAM (SDRAM), read-only memory (ROM), any combination of such, or the like. The mass storage element **630** may include any type of non-transitory storage device, such as a solid state drive, hard disk drive, a magnetic disk drive, an optical disk drive, USB drive, or any computer program product configured to store data and machine executable program code. According to certain embodiments, the memory **620** or mass storage **630** may have recorded thereon statements and instructions executable by the processor **610** for performing any of the aforementioned method steps described above.

Having regard to some formats of ambient IoTs, the device, as previously discussed depending on the type of A-IoT, the A-IoT device may not have a transceiver and only have a receiver, wherein this format of A-IoT device is capable of "transmitting" data to a ready using backscatter, namely transmitting using a carrier wave. In addition some formats of A-IoT devices will further include energy harvesting components, which can provide a means for the A-IoT device to recharge a batter associated therewith. As would be understood, energy harvesting is a process by which energy is obtained from external sources, for example solar power, thermal power, wind energy, kinetic energy and the like. The energy harvesting components required for particular type of energy harvesting that would be operative with an A-IoT device would be readily understood by a worker skilled in the art. For example, a solar cell can provide solar power harvesting.

It will be appreciated that, although specific embodiments of the technology have been described herein for purposes of illustration, various modifications may be made without departing from the scope of the technology. The specification and drawings are, accordingly, to be regarded simply as an illustration of the invention as defined by the appended claims, and are contemplated to cover any and all modifications, variations, combinations or equivalents that fall within the scope of the present invention. In particular, it Is within the scope of the technology to provide a computer program product or program element, or a program storage or memory device such as a magnetic or optical wire, tape or disc, or the like, for storing signals readable by a machine, for controlling the operation of a computer according to the method of the technology and/or to structure some or all of its components in accordance with the system of the technology.

Acts associated with the method described herein can be implemented as coded instructions in a computer program product. In other words, the computer program product is a computer-readable medium upon which software code is recorded to execute the method when the computer program product is loaded into memory and executed on the microprocessor of the wireless communication device.

Acts associated with the method described herein can be implemented as coded instructions in plural computer program products. For example, a first portion of the method may be performed using one computing device, and a second portion of the method may be performed using another computing device, server, or the like. In this case, each computer program product is a computer-readable medium upon which software code is recorded to execute appropriate portions of the method when a computer program product is loaded into memory and executed on the microprocessor of a computing device.

Further, each step of the method may be executed on any computing device, such as a personal computer, server, PDA, or the like and pursuant to one or more, or a part of one or more, program elements, modules or objects generated from any programming language, such as C++, Java, or the like. In addition, each step, or a file or object or the like implementing each said step, may be executed by special purpose hardware or a circuit module designed for that purpose.

It is obvious that the foregoing embodiments of the invention are examples and can be varied in many ways. Such present or future variations are not to be regarded as a departure from the spirit and scope of the invention, and all such modifications as would be obvious to one skilled in the art are intended to be included within the scope of the following claims.

**Claims**

1. A method for managing communication availability by an ambient internet of things (A-IoT) device, the method comprising:

   upon determination that a transaction is required, checking energy storage levels of the A-IoT device and energy storage levels required to perform the transaction with a reader;
   upon determination that there is insufficient energy storage levels to perform the transaction, sending an indication to the reader; and
   upon determination that there is sufficient energy storage levels to perform the transaction, proceeding with the transaction with the reader.

2. The method of claim 1, wherein prior to sending the indication, determining that there is sufficient energy to send the indication.

3. The method of claim 1 or 2, wherein the indication is indicative of an out of power message.

4. The method of any one of claims 1 to 3, wherein the indication is indicative of one or more of a request to pause the transaction, a request to save a state of the transaction and a request to continue the transaction at a future time.

5. The method of any one of claims 1 to 4, further comprising monitoring energy storage levels.

6. The method of claim 5, wherein upon determination that there is insufficient energy storage levels to complete the transaction, sending an indication to the reader, wherein the indication is indicative of one or more of a request to pause the transaction, a request to save a state of the transaction and a request to continue the transaction at a future time.

7. The method of any one of claims 1 to 6, wherein determination that a transaction is required includes receiving a transaction request for a downlink communication.

8. An apparatus managing power availability, the apparatus comprising:

   a processor; and
   machine readable memory storing machine executable instructions which when executed by the processor configure the apparatus to:

      upon determination that a transaction is required, check energy storage levels of the apparatus and energy storage levels required to perform the transaction with a reader;
      upon determination that there is insufficient energy storage levels to perform the transaction, send an indication to the reader; and
      upon determination that there is sufficient energy storage levels to perform the transaction, proceeding with the transaction with the reader.

9. The apparatus of claim 8, wherein prior to sending the indication, the machine executable instructions when executed by the processor further configure the apparatus to determine that there is sufficient energy to send the indication.

10. The apparatus of claim 8 or 9, wherein the indication is indicative of an out of power message.

11. The apparatus of any one of claims 8 to 10, wherein the indication is indicative of one or more of a request to pause the transaction, a request to save a state of the transaction and a request to continue the transaction at a future time.

12. The apparatus of any one of claims 8 to 11, wherein the machine executable instructions when executed by the processor further configure the apparatus to monitor energy storage levels.

13. The apparatus of claim 12, wherein upon determination that there is insufficient energy storage levels to complete the transaction, the machine executable instructions when executed by the processor further configure the apparatus to send an indication to the reader, wherein the indication is indicative of one or more of a request to pause the transaction, a request to save a state of the transaction and a request to continue the transaction at a future time.

**14.** The apparatus of any one of claims 8 to 13, wherein determination that a transaction is required includes receiving a transaction request for a downlink communication.

**15.** A computer program product comprising a computer readable memory storing computer executable instructions thereon that when executed by a processor perform the method for managing communication availability by an ambient internet of things (A-IoT) device, the method comprising:

upon determination that a transaction is required, checking energy storage levels of the A-IoT device and energy storage levels required to perform the transaction with a reader;
upon determination that there is insufficient energy storage levels to perform the transaction, sending an indication to the reader; and
upon determination that there is sufficient energy storage levels to perform the transaction, proceeding with the transaction with the reader.

100

105 Transaction required

110 Check ES level

115 Sufficient ES ?

N

120 Send ES out of power message

125 EH or recharge

Y

130 Proceed with transaction

FIG. 1A

FIG. 1B

**FIG. 2A**

FIG. 2B

Reader

Device

Msg 0

Msg 1

Msg 2

Msg 3

Msg 4

**FIG. 3**

FIG. 4

FIG. 5A

FIG. 5B

FIG. 6

FIG. 7

EP 4 647 961 A1

**FIG. 8**

FIG. 9

EP 4 647 961 A1

Europäisches
Patentamt

European
Patent Office

Office européen
des brevets

# EUROPEAN SEARCH REPORT

**Application Number**

EP 25 17 5178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/138754 A1 (FEKI AFEF [DE] ET AL) 17 May 2018 (2018-05-17) | 1-3,5, 7-10,12, 14,15 | INV. G06K19/07 G06K7/10 |
| A | * paragraphs [0003], [0048], [0049], [0057] * <br> * figures 1,2,4 * | 4,6,11, 13 | H02J50/80 H04W52/02 |
| A | US 2023/254886 A1 (GUPTA PIYUSH [US] ET AL) 10 August 2023 (2023-08-10) <br> * paragraph [0004] - paragraph [0008] * <br> * paragraph [0052] - paragraph [0055] * <br> * paragraph [0104] - paragraph [0121] * | 1-15 | |
| A | EP 3 155 562 B1 (VERILY LIFE SCIENCES LLC [US]) 17 February 2021 (2021-02-17) <br> * paragraph [0073] - paragraph [0076] * <br> * paragraph [0083] - paragraph [0095] * | 1-15 | |

**TECHNICAL FIELDS SEARCHED (IPC)**

G06K

The present search report has been drawn up for all claims

| Place of search | Date of completion of the search | Examiner |
|---|---|---|
| Munich | 12 September 2025 | Geiger, Hans-Walter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 5178

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2025

| Patent document cited in search report | | Publication date | Patent family member(s) | | Publication date |
|---|---|---|---|---|---|
| US 2018138754 | A1 | 17-05-2018 | CN | 107408846 A | 28-11-2017 |
| | | | EP | 3311465 A1 | 25-04-2018 |
| | | | US | 2018138754 A1 | 17-05-2018 |
| | | | WO | 2017020930 A1 | 09-02-2017 |
| US 2023254886 | A1 | 10-08-2023 | CN | 118575388 A | 30-08-2024 |
| | | | EP | 4476809 A1 | 18-12-2024 |
| | | | US | 2023254886 A1 | 10-08-2023 |
| | | | WO | 2023154623 A1 | 17-08-2023 |
| EP 3155562 | B1 | 17-02-2021 | CN | 106462790 A | 22-02-2017 |
| | | | EP | 3155562 A1 | 19-04-2017 |
| | | | US | 2015363614 A1 | 17-12-2015 |
| | | | WO | 2015192049 A1 | 17-12-2015 |

For more details about this annex : see Official Journal of the European Patent Office, No. 12/82

**REFERENCES CITED IN THE DESCRIPTION**

**Patent documents cited in the description**

- US 63644793